# EUROPEAN PATENT APPLICATION

(11) **EP 4 364 883 A1**
(43) Date of publication of application: **08.05.2024**
(21) Application number: 22833599.8
(22) Date of filing: 28.06.2022
(51) Int. Cl.: B23K 35/02, B23K 26/40, B23K 35/30

(54) **CARBON FILAMENT WIRE FOR LASER WELDING OF STEEL SHEET HAVING ALUMINIUM-BASED COATING LAYER, LASER WELDING METHOD OF STEEL SHEET HAVING ALUMINIUM-BASED COATING LAYER USING SAME, AND WELDED PRODUCT PRODUCED BY SAME**

(30) Priority: 01.07.2021 KR 20210086583
(71) Applicant: POSCO Co., Ltd, Pohang-si, Gyeongsangbuk-do 37859 (KR)
(72) Inventor: LEE, Mok-Young, Incheon 21985 (KR); CHOI, Du-Youl, Incheon 21985 (KR); UHM, Sang-Ho, Incheon 21985 (KR); HAN, Do-Kyeong, Incheon 21985 (KR)
(74) Representative: Meissner Bolte Partnerschaft mbB
(86) International application number: PCT/KR2022/009252
(87) International publication number: WO 2023/277543

(57) **Abstract**

One embodiment of the present invention provides a carbon filament wire for laser welding of a steel sheet having an aluminum-based coating layer, a laser welding method of a steel sheet having an aluminum-based coating layer by using same, and a welded product produced by same, the carbon filament wire comprising: a resin matrix; and two or more carbon filaments provided inside the resin matrix.

## Description

### Technical Field

The present disclosure relates to a carbon filament wire for laser welding of a steel sheet having an aluminum-based coating layer, a laser welding method of a steel sheet having an aluminum-based coating layer using the same, and a welded product manufactured thereby.

### Background Art

In order to reduce emissions or improve fuel efficiency while securing the safety of automobiles, materials used for car bodies are required to have high strength. However, when the strength of the material is increased, molding such as pressing or the like is difficult, and problems arise in welding for assembling parts. This is because elements such as C, Si, Cr, Mn, etc., which are added to increase the strength of the material, increase the weld hardenability, and thus there is a problem of increasing the brittleness of the weld zone.

Hot press molding is to manufacture a product by heating the material to A3 transformation temperature or higher, and then cooling the same at the same time as molding through a press. At this time, austenite in the material is transformed into martensite by rapid cooling by the press mold to increase the strength of the material. The technology is increasingly applied to parts such as B-pillars and the like requiring excellent crash performance in automobiles. Moreover, in order to increase strength and reduce weight, cases of manufacturing parts using TWB panels manufactured by laser welding materials of different thicknesses or steel types for each position are increasing.

On the other hand, when press molding a plate material heated to a high temperature, problems such as oxidation and decarburization occur on the surface of the plate material, or a problem in which the plate material is stuck to the mold, etc. occur. For this reason, in the case of existing galvanized steel sheet, which is mainly used as a material for automobiles, it is difficult to use because the evaporation temperature (about 906°C) of zinc is low. In order to solve this problem, the use of aluminum or aluminum-silicon coated steel sheets is increasing. However, aluminum and silicon are elements that promote the formation of ferrite, and thus cause a problem of lowering the strength of weld zones of hot-formed parts. That is, when aluminum or aluminum-silicon coated steel sheets are welded, the aluminum or silicon component of the plating layer is mixed into the weld zone to promote ferrite generation, and as a result, the formation of martensite in the weld zone of the hot-formed part is hindered, resulting in a decrease in strength.

As a technique for solving these problems, there is provided Patent Literature 1. Patent Document 1 proposes a method of laser welding after removing the plating layer in the area where the weld zone is to be formed with a brush or laser. However, since this method requires an additional process, there is a problem in that the process becomes complicated and costs are added.

As another technique, there is Patent Literature 2. In Patent Document 2, a method of promoting austenite formation in a weld zone using a filler wire is proposed. However, this method has a problem in that the addition amount of the austenite formation promoting element is limited and the manufacturing cost of the part increases because an additional processing step is required due to the excessive formation of a weld bead.

### [Prior art literature]

(Patent Document 1) EP 2007545
(Patent Document 2) US 2020/0353983

### Summary of Invention

### Technical Problem

An aspect of the present disclosure is to provide a carbon filament wire for laser welding of a steel sheet having an aluminum-based coating layer, a laser welding method of a steel sheet having an aluminum-based coating layer using the same, and a welded product manufactured thereby.

### Solution to Problem

According to an aspect of the present disclosure, a carbon filament wire for laser welding of a steel sheet having an aluminum-based coating layer, includes a resin matrix; and two or more carbon filaments provided inside of the resin matrix.

According to another aspect of the present disclosure, a method of laser welding a steel sheet having an aluminum-based coating layer, as a welding method for laser welding two or more aluminum-based coated steel sheets, includes feeding a carbon filament wire containing a resin matrix; and two or more carbon filaments provided inside of the resin matrix, during the laser welding.

According to another aspect of the present disclosure, a welded product produced by the producing method described above is provided.

### Advantageous Effects of Invention

According to one aspect of the present disclosure, provided are a carbon filament wire for laser welding of a steel sheet having an aluminum-based coating layer, a laser welding method of a steel sheet having an aluminum-based coating layer using the same, and a welded product manufactured thereby, and therefore, the problem of lowering the strength of the weld zone compared to the base material may be resolved without requiring an additional process when manufacturing parts through hot press forming.

### Brief Description of Drawings

FIG. 1 is a cross-sectional view of a carbon filament wire for laser welding of a steel sheet having an aluminum-based coating layer according to an embodiment of the present disclosure.
FIG. 2 provides photographs of weld zones of Invention Example 1 according to an embodiment of the present disclosure and Comparative Example 1 observed with an optical microscope.
FIG. 3 provides photographs of weld zones of Invention Example 1 according to an embodiment of the present disclosure and Comparative Example 1 observed with a scanning electron microscope.
FIG. 4 is a photograph obtained by observing the concentrations of Al and C in the weld zones of Invention Example 1 and Comparative Example 1 by Electron Probe Micro Analysis (EPMA) .
FIG. 5 is a graph illustrating the hardness distribution of the weld zones of Invention Example 1 according to an embodiment of the present disclosure and Comparative Example 1.
FIG. 6 provides photographs of fracture surfaces of Invention Example 1 according to an embodiment of the present disclosure and Comparative Example 1, after a tensile test, observed with a scanning electron microscope.

### Best Mode for Invention

Hereinafter, a carbon filament wire for laser welding of a steel sheet having an aluminum-based coating layer according to an embodiment of the present disclosure will be described.

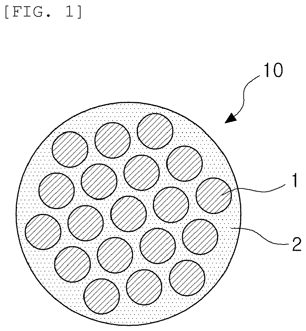

FIG. 1 is a cross-sectional view of a carbon filament wire for laser welding of a steel sheet having an aluminum-based coating layer according to an embodiment of the present disclosure.

As illustrated in FIG. 1, a carbon filament wire 10 of the present disclosure includes a resin matrix 1 and two or more carbon filaments 2 provided inside of the resin matrix 1.

The resin matrix provides strength and rigidity so that carbon filaments having a very small diameter are coupled to each other to be supplied to a weld zone, and a portion of the C generated by being decomposed by the laser beam is incorporated into the weld zone and serves to help suppress the generation of ferrite. In the present disclosure, the type of the resin matrix is not particularly limited, but a thermoplastic resin, a thermosetting resin, or the like may be used, and for example, polyamide, polyvinyl chloride, polyacetal, polyethylene, polypropylene, polystyrene, polyvinyl acetate, polyacrylate, methacrylic resin, polyvinylidene chloride, fluororesin, polycarbonate, phenolic resin, furan resin, urea resin, melamine resin, epoxy resin, unsaturated ester resin, alkyd resin, polyurethane, epoxy resin, phenolic resin, polyamide, polysulfide, silicone, nitrile rubber, etc. may be used.

During welding, the carbon filament is decomposed by a laser beam and incorporated into the weld zone, thereby suppressing the generation of ferrite. More specifically, the conventional welding wire is added with a similar level (1% or less) of C as the base material component of the plated steel sheet, whereas the carbon filament of the present disclosure may contain a higher level of carbon, and thus, generation of ferrite may be suppressed even if Al of the plating layer is mixed in the weld zone. On the other hand, when the number of carbon filaments is two or more, the feedability of the carbon filament wire may be improved. This is because the carbon filament has a very thin diameter and is too flexible, which is unfavorable for feeding, so that the rigidity increases when several carbon filaments are impregnated with a resin.

The carbon filament wire may have a diameter of 0.1 to 5 mm. If the diameter of the carbon filament wire is less than 0.1 mm, it may be difficult to supply the carbon filament wire during welding, and if it exceeds 5 mm, the amount of carbon incorporated into the weld zone is excessive, and it may also be difficult to sufficiently melt the carbon filament wire by the laser beam during welding.

The aspect ratio (length/diameter) of the carbon filament may be 10000 or more. If the aspect ratio of the carbon filament is less than 10000, sufficient ductility may not be secured, and thus during welding, smooth and continuous feeding of the carbon filament wire may become impossible. The higher the aspect ratio (length/diameter) of the carbon filament is, the more advantageous it is for continuous work, and thus the upper limit is not particularly limited in the present disclosure.

The carbon filament may have a diameter of 1 to 1000 pm. If the diameter of the carbon filament is less than 1 pm, it may be easily broken during the manufacturing process and the carbon content in the carbon filament wire may also decrease, and if it exceeds 1000 pm, the flexibility of the carbon filament wire is reduced, and it may be difficult to sufficiently melt the carbon filament wire by the laser beam during welding.

Based on the cross-section of the carbon filament wire, the fraction occupied by the carbon filament in the carbon filament wire may be 50 to 90 area%. The resin matrix is easily burned and does not significantly contribute to the carbon incorporation of the weld zone, but rather contaminate the weld zone or surroundings. Therefore, if the area ratio of the carbon filament is less than 50%, the weld zone or the surrounding environment may be contaminated. On the other hand, if the area ratio of the carbon filaments exceeds 90%, the bonding force between the carbon filaments is weakened, and feeding performance may be deteriorated.

On the other hand, at least one of the carbon filaments may be replaced with a solid wire. The solid wire is composed of components similar to the base material of the plated steel sheet and serves to supplement underfill (lack of filling) that may occur due to gaps in the weld zone, spatter or the like, or to strengthen the weld zone by increasing the reinforcement (overlapping) of the weld zone. In addition, since the solid wire has relatively high rigidity, the strength and rigidity of the carbon filament wire may be improved.

The solid wire used commonly used in the art may be used, and may include, in weight%, for example, C: 0.001 to 1.0%, Mn: 0.01 to 25%, Si: 0.01 to 5.0%, balance Fe and unavoidable impurities.

The solid wire may have a diameter of 0.01 to 0.05 mm. If the diameter of the solid wire is less than 0.01 mm, the effect of increasing the volume of the weld zone, reinforcing stiffness and the like may be lowered, and if it exceeds 0.05mm, the effect of increasing the carbon content of the weld zone may be reduced.

Meanwhile, in the present disclosure, a method of manufacturing the carbon filament wire is not particularly limited. However, for example, the carbon filament wire may be produced by passing a carbon filament through a container equipped with a liquid or plasticized resin, passing through a nozzle of a required diameter, and then allowing the same to be naturally cooled, or, if necessary, subjecting the same to a hardening treatment. At this time, the carbon filaments may be present in a stranded form (twisted with each other) for easy feeding to a container equipped with resin.

Hereinafter, a laser welding method for a steel sheet having an aluminum-based coating layer according to an embodiment of the present disclosure will be described.

A laser welding method for a steel sheet having an aluminum-based coating layer according to an embodiment of the present disclosure is a welding method for laser welding an aluminum-based coated steel sheet, and is characterized by feeding a carbon filament wire containing resin matrix; and two or more carbon filaments provided inside of the resin matrix, during the laser welding.

In the present disclosure, the laser welding method is not particularly limited, and all methods commonly used in the art may be used. As long as the plated steel sheet also has an aluminum-based coating layer formed thereon, all types of steel sheets used in the art may be used. In addition, the plated steel sheets to be welded may have different thicknesses or strengths. On the other hand, the aluminum-based coating layer may be an Al-based plating layer or an Al-Si-based plating layer.

During the laser welding, the welding heat input may be 10 to 200 J/mm. If the welding heat input is less than 10 J/mm, it may be difficult to sufficiently melt the material to be welded or the carbon filament wire, and if it exceeds 200 J/mm, the material to be welded and the carbon filament molten material may be lost due to melting. On the other hand, the welding heat input (Q) may be obtained as Q=P_{L}/V, where P_{L} is the laser power (watt (W)) and V is the welding speed (mm/s).

A feeding speed of the carbon filament wire may be 2 to 200 mm/s. If the feeding speed of the carbon filament wire is less than 2 mm/s, it may be difficult to suppress the generation of ferrite phase because the amount of carbon dilution in the weld zone is small, and when it exceeds 200 mm/s, it is difficult to sufficiently dissolve the carbon filament wire with a laser beam, and furthermore an excessive amount of carbon added to the weld zone may weaken the weld zone. On the other hand, the feeding speed (s) may be obtained by s=t ·v/d, where t is the thickness (mm) of the material to be welded, v is the welding speed, d is the diameter (mm) of the carbon filament wire. On the other hand, when the thicknesses of the materials to be welded, that is, the plated steel sheets are different from each other, the feeding speed may be obtained in consideration of the average thickness.

Hereinafter, a welded product according to an embodiment of the present disclosure will be described.

The present disclosure provides a welded product manufactured by the laser welding method of a steel sheet having an aluminum-based coating layer using the above-described carbon filament wire.

In the present disclosure, since the plating layer of the region in which the weld zone is to be formed is not removed, in the welded product, Al in the plating layer of the plated steel sheet is mixed into the weld zone. In addition, since welding is performed using a carbon filament wire, the C content of the weld zone also increases. Therefore, the welded product of the present disclosure has a higher content of Al and C compared to the base metal. Accordingly, the martensitic structure is easily formed in the weld zone, and the strength and rigidity are improved.

On the other hand, the welded product may be a welded steel sheet or a molded part obtained by hot press forming the welded steel sheet. The molded part may be a Tailor Welded Blank (TWB) in which two or more steel sheets may have the same thickness or strength, but may have different thicknesses or strength. In addition, the molded parts may be applied to A-pillars, B-pillars, bumper beams, door beams, cross members, etc. of automobiles.

### Mode for Invention

Hereinafter, the present disclosure will be described in more detail through examples. However, the following examples are only examples for explaining the present disclosure in more detail, and do not limit the scope of the present disclosure.

### (Example)

After fabricating a carbon filament wire having the conditions illustrated in Table 1 below, a tensile strength 1.5 GPa class steel sheet having an Al-Si-based plating layer was butted, and then laser welding was performed under the conditions illustrated in Table 1 while feeding the carbon filament wire. At this time, an epoxy resin was used as the resin matrix. After hot press forming with respect to the welded product manufactured in this manner, the microstructure, tensile strength and hardness of the weld zone are measured, and then the results are illustrated in Table 2 below. On the other hand, Comparative Example 1 was autogenous welded without supplying a welding wire.

The microstructure was observed with an optical microscope by molding and polishing the specimen having the weld zone and then corroding the same with 2% nital corrosion solution.

For tensile strength, a specimen was processed according to KS B 0801 No. 13B standard, a tensile test was conducted according to KS B 0802, and the maximum load was measured.

Hardness was measured by Vickers hardness test according to KS B 0811 at a load of 500 gf.

**[Table 1]**

| Divisi on | Number of Carbon Filamen t (number ) | Diameter of Carbon Filament Wire (mm) | Aspect Ratio of Carbon Filament (length/ diameter ) | Diamete r of Carbon Filamen t (pm) | Fraction of carbon filament in carbon filament wire (area%) | Weldi ng Heat Input (J/mm ) | Wire Feedin g Speed (mm/s) |
|---|---|---|---|---|---|---|---|
| Compar ative Exampl e 1 | - | - | - | - | - | 30 | - |
| Invent ion Exampl e 1 | 1500 | 0.3 | 10000 or more | 7 | 81.7 | 30 | 100 |

**[Table 2]**

| Division | Microstructure | Tensile Strength (MPa) | Hardness (Hv) |
|---|---|---|---|
| Comparativ e Example 1 | Ferrite + Martensite | 910 | 270 |
| Invention Example 1 | Martensite | 1250 | 650 |

As can be seen from Tables 1 and 2, Invention Example 1 has high tensile strength and hardness due to the formation of martensite, whereas, it can be seen that Comparative Example 1 has low tensile strength and hardness due to the formation of some ferrite.

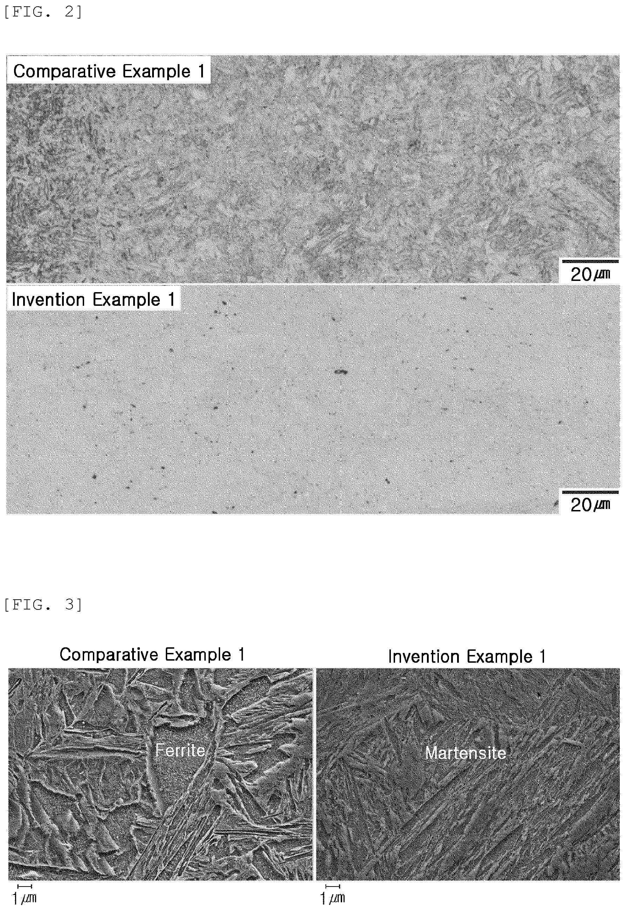

FIG. 2 provides photographs of the weld zones of Invention Example 1 and Comparative Example 1, observed with an optical microscope, and FIG. 3 provides photographs of the weld zones of Invention Example 1 and Comparative Example 1 observed with a scanning electron microscope. As can be seen through FIGS. 2 and 3, in the case of Invention Example 1, martensite was formed, whereas in the case of Comparative Example 1, it can be seen that ferrite was formed in addition to martensite.

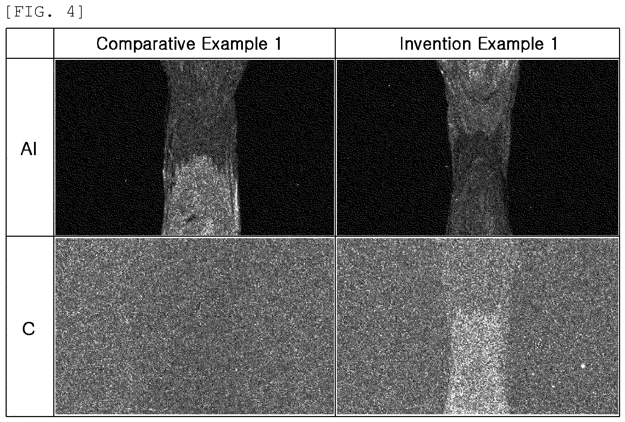

FIG. 4 is a photograph obtained by observing the concentrations of Al and C in the weld zones of Invention Example 1 and Comparative Example 1 by Electron Probe Micro Analysis (EPMA). As can be seen from FIG. 4, Invention Example 1 and Comparative Example 1 have similar Al contents, but in Comparative Example 1, the C contents of the weld zone and the base material are at a similar level, whereas in the case of Invention Example 1, it can be seen that the C content of the weld zone is high compared to the base material.

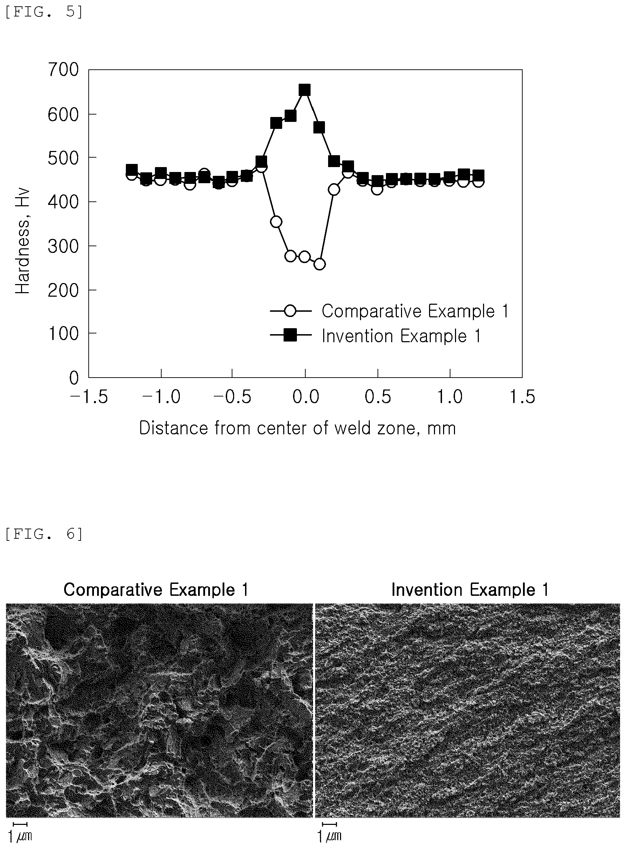

FIG. 5 is a graph illustrating the hardness distribution of the weld zones of Invention Example 1 and Comparative Example 1. As can be seen from FIG. 5, in the case of Invention Example 1, the hardness of the weld zone is high compared to the base material, whereas in the case of Comparative Example 1, the hardness of the weld zone is low compared to the base material.

FIG. 6 provides photographs of the fracture surfaces observed with a scanning electron microscope after the tensile test of Invention Example 1 and Comparative Example 1. As can be seen from FIG. 6, in the case of Invention Example 1, fine intragranular fractures were observed, whereas, it can be seen that in Comparative Example 1, cleavage fractures occurred.

### Description of Reference Characters

- 1:: resin matrix
- 2:: carbon filament
- 10:: carbon filament wire

## Claims

1. A carbon filament wire for laser welding of a steel sheet having an aluminum-based coating layer, comprising:
a resin matrix; and
two or more carbon filaments provided inside of the resin matrix.

2. The carbon filament wire for laser welding of a steel sheet having an aluminum-based coating layer according to claim 1, wherein a diameter of the carbon filament wire is 0.1 to 5mm.

3. The carbon filament wire for laser welding of a steel sheet having an aluminum-based coating layer according to claim 1, wherein an aspect ratio (length/diameter) of the carbon filament is 10000 or more.

4. The carbon filament wire for laser welding of a steel sheet having an aluminum-based coating layer according to claim 1, wherein a diameter of the carbon filament is 1 to 1000 pm.

5. The carbon filament wire for laser welding of a steel sheet having an aluminum-based coating layer according to claim 1, wherein based on a cross-section of the carbon filament wire, a fraction occupied by the carbon filament in the carbon filament wire is 50 to 90 area%.

6. The carbon filament wire for laser welding of a steel sheet having an aluminum-based coating layer according to claim 1, wherein at least one of the carbon filaments is replaced with a solid wire.

7. The carbon filament wire for laser welding of a steel sheet having an aluminum-based coating layer according to claim 6, wherein the solid wire contains, by weight%, C: 0.001 to 1.0%, Mn: 0.01 to 25%, Si: 0.01 to 5.0%, a balance Fe and unavoidable impurities.

8. The carbon filament wire for laser welding of a steel sheet having an aluminum-based coating layer according to claim 6, wherein the solid wire has a diameter of 0.01 to 0.05 mm.

9. A method of laser welding a steel sheet having an aluminum-based coating layer, as a welding method for laser welding two or more aluminum-based coated steel sheets, the method comprising:
feeding a carbon filament wire containing a resin matrix; and two or more carbon filaments provided inside of the resin matrix, during the laser welding.

10. The method of laser welding a steel sheet having an aluminum-based coating layer according to claim 9, wherein the aluminum-based coating layer is an Al-based plating layer or an Al-Si-based plating layer.

11. The method of laser welding a steel sheet having an aluminum-based coating layer according to claim 9, wherein during the laser welding, a welding heat input is 10 to 200 J/mm.

12. The method of laser welding a steel sheet having an aluminum-based coating layer according to claim 9, wherein a feeding speed of the carbon filament wire is 2 to 200mm/s.

13. A welded product produced according to any one of claims 9 to 12.

14. The welded product of claim 13, wherein the welded product is **characterized in that** Al and C contents of a weld zone are high compared to a base material.
